# EUROPÄISCHE PATENTSCHRIFT

(11) **EP 2 907 268 B1**
(45) Veröffentlichungstag und Bekanntmachung des Hinweises auf die Patenterteilung: **13.07.2016**
(21) Anmeldenummer: 13779730.4
(22) Anmeldetag: 04.10.2013
(51) Int. Cl.: H04L 12/24, B60R 16/023

(54) **VERFAHREN ZUM KONFIGURIEREN EINER STEUEREINHEIT, STEUEREINHEIT UND FAHRZEUG**
METHOD FOR CONFIGURING A CONTROL UNIT, CONTROL UNIT AND VEHICLE
PROCÉDÉ DE CONFIGURATION D'UNE UNITÉ DE COMMANDE, UNITÉ DE COMMANDE ET VÉHICULE

(30) Priorität: 12.10.2012 DE 102012019993
(43) Veröffentlichungstag der Anmeldung: 19.08.2015
(73) Patentinhaber: Audi AG, 85045 Ingolstadt (DE)
(72) Erfinder: MEYER, Jürgen, 85125 Kinding (DE)
(74) Vertreter: Brandt, Kai
(86) Internationale Anmeldenummer: PCT/EP2013/002990
(87) Internationale Veröffentlichungsnummer: WO 2014/056593

(56) Entgegenhaltungen:
- DE-A1- 10 334 587
- DE-A1-102006 036 441
- US-A1- 2011 119 556

## Beschreibung

Die vorliegende Erfindung betrifft ein Verfahren zum Konfigurieren einer Steuereinheit. Die Steuereinheit kann Teil eines Fahrzeugs oder einer anderen Vorrichtung, beispielsweise einer Fertigungsvorrichtung, sein. Mit 'Steuereinheit' wird ein Steuergerät oder ein Teil eines Steuergeräts bezeichnet.

Außerdem betrifft die Erfindung eine Steuereinheit.

Darüberhinaus betrifft die Erfindung ein Fahrzeug.

Steuerungsfunktionen eines Fahrzeugs werden Funktionsgruppen zugeordnet. Diese Funktionsgruppen werden als Funktionscluster bezeichnet. Typisch sind beispielsweise folgende Funktionscluster: Antrieb, Fahrwerk, Sicherheit, Telematik, Mensch-Maschine-Schnittstelle, Karosserie- und Komfortfunktionen. Die Zuweisung (Zuordnung) eines Steuergeräts zu einem oder mehreren Funktionsclustern wird als Funktionsclusterzuweisung oder als Konfiguration bezeichnet. Bisher wird die Funktionsclusterzuweisung bei der Herstellung oder bei einer Erstinbetriebnahme des Steuergeräts in dem Programmcode des Steuergeräts festgelegt. In jeder Botschaft (PDU = *packet data units*), die zwischen den Steuergeräten ausgetauscht wird, sind maximal 64 Bit vorgesehen, mit denen die Datenquelle der Botschaft für die empfangenden Steuergeräte eine Zuweisung bzw. Nichtzuweisung der Botschaft zu jedem von maximal 64 Funktionsclustern kennzeichnen kann. Dadurch ist die Anzahl der möglichen Funktionscluster auf 64 Funktionscluster begrenzt.

Obwohl der Adressraum von 64 Funktionsclustern zur Unterscheidung aller Funktionscluster eines heutigen Fahrzeuge ausreicht, gibt es folgende weitere Entwicklungsanforderung, die mit der Begrenzung auf maximal 64 Funktionscluster nicht ohne Weiteres verträglich ist. Im Fahrzeugbau wird insbesondere auch bei Steuereinheiten und deren Software ein Baukastenprinzip angewendet. Dies führt nicht nur dazu, dass eine Steuereinheit mit gleicher Software typischerweise in unterschiedlichen Fahrzeugtypen (Fahrzeugderivaten) verbaut wird, sondern dass dieselbe Steuereinheit in den unterschiedlichen Fahrzeugtypen auch mit unterschiedlichen Teilmengen von Funktionsclustern genutzt wird. Damit ist die in der Steuergerätesoftware zu konfigurierende Funktionsclusterzuweisung nicht nur von dem Steuergerätetyp, sondern auch von dem genauen Fahrzeugtyp (Fahrzeugderivat) abhängig. Weil die Funktionsclusterzuweisung nach dem Stand der Technik bei der Herstellung oder einer Erstinbetriebnahme des Steuergeräts in dem Programmcode des Steuergeräts festgelegt werden muss, führt dies in der Praxis zu fahrzeugtypspezifischen Softwareständen, also zu einer Erhöhung der Anzahl von Softwareversionen für denselben Typ von Steuereinheit. Durch die Vielfalt von Softwareversionen erhöhen sich Softwarepflegeaufwand und Kosten je Steuergerät erheblich.

US 2011/119556 offenbart ein Steuerungsnetz, in dem an festen Orten von Kabelbäumen Kennungsschlüssel eingebaut sind, die eine eindeutige Erkennung des jeweiligen Ortes gewährleisten, an dem das jeweilige Steuergerät ECU eingebaut ist. Die einbauortsabhängige Gerätekonfiguration kann beispielsweise mit Steckverbindern im Kabelbaum verwirklicht werden, die jeweils mittels einer Drahtbrücke unterschiedlich codiert sind. In einer Ausführungsform sind die Kennungsschlüssel an einer Stelle des Netzes eingebaut, die nicht zu den Kabelbäumen gehört.

DE 103 34 587 offenbart eine Vorrichtung mit Schiebereglern zur fahrerabhängigen Manipulation von Parametern von Funktionsclustern. Hierdurch wird vermieden, dass sich ein Fahrer um einzelne interne Systemparameter einer Fahrzeugfunktion zu kümmern braucht. Die Druckschrift beschreibt kein Verfahren zum Übermitteln, Empfangen, Vorbereiten, Gültigschalten und Verwenden von Funktionsclusterzuweisungen.

DE 10 2006 036441 offenbart eine dynamische Installation von Software in einem Steuergeräteverbund. Wenn erforderliche Ressourcen auf einem Steuergerät nicht mehr zur Verfügung stehen, verschiebt ein Installationsmanager andere, bereits im Systemverbund existierende Komponenten so auf weitere Steuergeräte, dass für die bereits abgelegten Komponenten ausreichende Ressourcen zur Verfügung stehen.

Es ist eine Aufgabe der vorliegenden Erfindung, ein Verfahren zum Konfigurieren einer Steuereinheit bereitzustellen, mit dem ein Softwarepflegeaufwand je Steuergerät verringert werden kann.

Diese Aufgabe wird erfindungsgemäß durch ein Verfahren gemäß Patentanspruch 1, durch eine Steuereinheit gemäß Patentanspruch 9 und ein Fahrzeug gemäß Anspruch 10 gelöst. Vorteilhafte Weiterbildungen der vorliegenden Erfindungen sind in den Unteransprüchen angegeben.

Erfindungsgemäß wird zum Konfigurieren einer Steuereinheit ein Verfahren bereitgestellt, das folgende Schritte umfasst: Übermitteln einer Funktionsclusterzuweisung von einer Datenquelle zu der Steuereinheit, wobei die Funktionsclusterzuweisung die Steuereinheit einer Auswahl von Funktionsclustern zuordnet, Empfangen der Funktionsclusterzuweisung durch die Steuereinheit, Vorbereiten der Steuereinheit auf ein Verwenden der Funktionsclusterzuweisung, Gültigschalten der Funktionsclusterzuweisung in der Steuereinheit und Verwenden der Funktionsclusterzuweisung in der Steuereinheit.

Durch Bereitstellung des erfindungsgemäßen Verfahrens kann die Funktionsclusterzuweisung in der Steuereinheit auch ohne fahrzeugtypspezifische Steuergerätesoftware fahrzeugtypspezifisch konfiguriert werden. Durch Nachladbarkeit der Funktionsclusterzuweisung in die Steuereinheit erübrigen sich fahrzeugtypspezifische Softwarestände und der damit verbundene Softwarepflegeaufwand.

In Bezug auf die Steuereinheit wird die Aufgabe dadurch gelöst, dass die Steuereinheit dazu vorbereitet ist, das erfindungsgemäße Verfahren durchzuführen.

In Bezug auf das Fahrzeug wird die Aufgabe dadurch gelöst, dass das Fahrzeug mindestens eine erfindungsgemäße Steuereinheit umfasst.

Eine bevorzugte Ausführungsform sieht vor, dass das Übermitteln der Funktionsclusterzuweisung über ein Datennetz und/oder über einen Datenbus erfolgt.

Es kann zweckmäßig sein, wenn ein Übertragen eines Befehls zum Vorbereiten der Steuereinheit auf ein Verwenden der Funktionsclusterzuweisung über ein Datennetz und/oder über einen Datenbus erfolgt. Alternativ oder zusätzlich kann ein Übertragen eines Befehls zum Gültigschalten der Funktionsclusterzuweisung über ein Datennetz und/oder über einen Datenbus erfolgen.

Bevorzugt ist, wenn von einer Datensenke in einem weiteren Schritt eines Auslesens die Funktionsclusterzuweisung über ein Datennetz und/oder über einen Datenbus ausgelesen werden kann. Mittels jeder der vier vorgenannten Maßnahmen kann Aufwand für eine eigene Infrastruktur der genannten Übertragungsaufgaben vermieden werden, indem ein üblicherweise sowieso vorhandenes Datennetz oder ein üblicherweise sowieso vorhandener Datenbus benutzt wird.

Besonders bevorzugt ist, wenn der Datenbus ein CAN-Bus, ein LIN-Bus, ein MOST-Bus und/oder ein FlexRay-Bus ist. Hierdurch wird Übertragungstechnik angewendet, die im Fahrzeugwesen erprobt und eingeführt ist.

Zielführend ist, wenn das Übermitteln der Funktionsclusterzuweisung und/oder ein Übertragen eines Befehls zum Vorbereiten der Steuereinheit auf ein Verwenden der Funktionsclusterzuweisung und/oder ein Übertragen eines Befehls zum Gültigschalten der Funktionsclusterzuweisung mittels eines Diagnoseprotokolls, eines Netzwerkmanagementprotokolls, eines Überwachungsprotokolls oder eines Messprotokolls erfolgt. Hierdurch wird die Konfiguration einer Steuereinheit mit wartungsnahen oder anderen verwandten Mitteln unterstützt, die zu dieser Aufgabenstellung passen.

Vorteilhaft ist, wenn beim Übermitteln der Funktionsclusterzuweisung und/oder beim Vorbereiten der Steuereinheit auf ein Verwenden der Funktionsclusterzuweisung und/oder beim Gültigschalten der Funktionsclusterzuweisung eine andere ältere Funktionsclusterzuweisung in der Steuereinheit gelöscht wird. Durch jede dieser Maßnahmen kann eine Freigabe und/oder Bereinigung des Datenspeichers der Steuereinheit erreicht werden und eine Wahrscheinlichkeit für einen unbeabsichtigten Betrieb mit einer älteren Funktionsclusterzuweisung verringert werden.

Es bietet auch Vorteile, wenn beim Übermitteln der Funktionsclusterzuweisung die Funktionsclusterzuweisung gleichzeitig von mehreren Steuereinheiten empfangen wird und/oder wenn beim Vorbereiten der Steuereinheit auf ein Verwenden der Funktionsclusterzuweisung gleichzeitig mehrere Steuereinheiten das Verwenden der Funktionsclusterzuweisung vorbereiten und/oder wenn beim Gültigschalten der Funktionsclusterzuweisung die Funktionsclusterzuweisung in mehreren Steuereinheiten gleichzeitig gültiggeschaltet wird. Falls mehrere Steuereinheiten mit einer identischen Funktionsclusterzuweisung zu konfigurieren sind, kann hierdurch eine Zeit verkürzt werden, die zur Konfiguration mehrerer Steuereinheiten erforderlich ist.

Die vorliegende Erfindung wird nun anhand der beigefügten Zeichnungen näher erläutert. Dabei zeigen:
- Fig. 1: schematisch eine einfache Funktionsclusterzuweisung für zwei unterschiedliche Fahrzeugtypen; und
- Fig. 2: schematisch ein Nachrichtenaustauschdiagramm eines Verfahrens zum Konfigurieren einer Steuereinheit.

Die nachfolgend näher beschriebenen Ausführungsbeispiele stellen bevorzugte Ausführungsformeri der vorliegenden Erfindung dar.

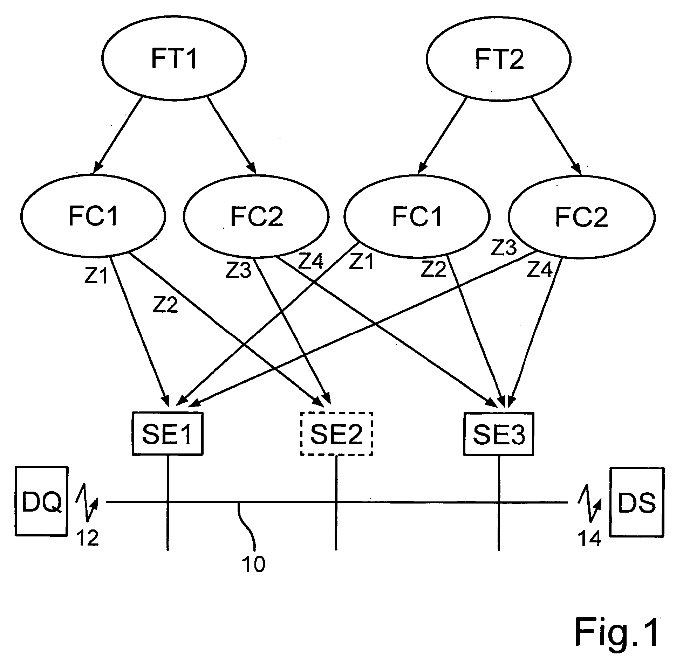

Die Fig. 1 zeigt schematisch ein Bussystem 10 mit mehreren daran angeschlossenen Steuereinheiten SE1, SE2, SE3. Außerdem zeigt die Figur eine Datenquelle DQ, die selbst eine Steuereinheit sein kann. Die Datenquelle DQ speist ihre Daten direkt in den Datenbus 10 oder über einen anderen Kommunikationsweg 12 (beispielsweise über einen Router oder eine Bridge) in den Datenbus 10 ein. Darüberhinaus zeigt die Figur eine optionale Datensenke DS, die mit einer Steuereinheit an dem Datenbus 10 oder mit der Datenquelle DQ identisch sein kann. Die Datenquelle DQ erhält ihre Daten direkt über den Datenbus 10 oder über einen anderen Kommunikationsweg 14 aus dem Datenbus 10 (beispielsweise über einen Router oder eine Bridge).

Typischerweise befinden sich die Steuereinheiten SE1, SE2, SE3, die Datenquelle DQ und die Datensenke DS in einem selben Fahrzeug. Es ist aber auch eine Anordnung vorstellbar, in der sich eine Teilmenge oder jede dieser Einheiten SE1, SE2, SE3, DQ, DS an einem anderen Ort oder in einem anderen Fahrzeug befindet und mittels Funkverbindungen und/oder ortsgebundenen Kommunikationswegen an den Datenbus 10 angebunden sind. Ein Anwendungsbeispiel hierfür ist beispielsweise ein Servicefahrzeug, in welchem sich nur eine Datenquelle DQ und eine Datensenke DS für beliebige instandzusetzende Fahrzeuge eines Fahrzeugherstellers befindet.

Darüberhinaus zeigt die Figur eine Funktionsclusterzuweisung z1, z2, z3, z4 der Steuereinheiten SE1, SE2, SE3, SE4 eines ersten Fahrzeugtyps FT1 und eines zweiten Fahrzeugtyps FT2. Einem Funktionscluster können mehrere Steuereinheiten zugeordnet sein. Beispielsweise sind dem Funktionscluster FC1 des Fahrzeugtyps FT1 die Steuereinheiten SE1 und SE2 zugeordnet. Eine selbe Steuereinheit kann mehreren Funktionsclustern zugeordnet sein. Beispielsweise ist die Steuereinheit SE2 des Fahrzeugtyps FT1 sowohl dem Funktionscluster FC1 als auch dem Funktionscluster FC2 zugeordnet. Die Funktionsclusterzuweisung für die beiden Fahrzeugtypen FT1, FT2 ist sehr unterschiedlich. Beispielsweise ist bei dem Fahrzeugtyp FT1 die Steuereinheit SE2 beiden Funktionsclustern FC1 und FC2 zugeordnet, während nur bei dem Fahrzeugtyp FT2 die Steuereinheit SE1 auch dem Funktionscluster FC2 und die Steuereinheit SE3 auch dem Funktionscluster FC1 zugeordnet ist.

Mit diesem (zur Erläuterung aus einer unendlichen Anzahl von Möglichkeiten willkürlich herausgegriffenen einfachen) Beispiel wird deutlich, dass die Summe der Funktionsclusterzuweisungen z1, z2, z3, z4 der Steuereinheiten SE1, SE2, SE3, SE4 zwischen dem ersten Fahrzeugtyp FT1 und dem zweiten Fahrzeugtyp FT2 trotz vieler Gemeinsamkeiten sehr unterschiedlich sein kann.

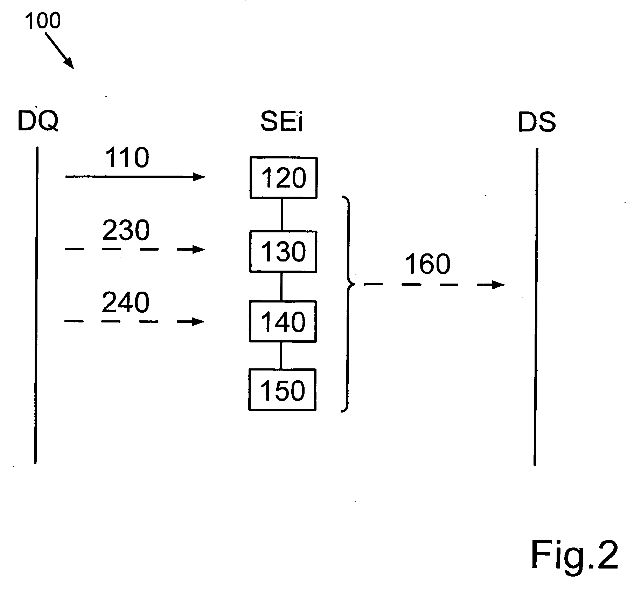

Die Fig. 2 zeigt ein Nachrichtenaustauschdiagramm mit einem Ablauf eines Verfahrens 100 zum Konfigurieren einer Steuereinheit SEi. Das Verfahren 100 umfasst folgende Schritte. In einem ersten Schritt 110 wird eine Funktionsclusterzuweisung Zi = (z1, z2, z3, z4) von einer Datenquelle DQ zu der Steuereinheit SEi übermittelt, wobei die Funktionsclusterzuweisung Zi eine Steuereinheit SEi einer Auswahl von Funktionsclustern FCj zuordnet. In einem zweiten Schritt 120 wird die Funktionsclusterzuweisung Zi durch die Steuereinheit SEi empfangen. In einem dritten Schritt 130 wird die Steuereinheit SEi auf ein Verwenden der Funktionsclusterzuweisung Zi vorbereitet. In einem vierten Schritt 140 wird die Funktionsclusterzuweisung Zi in der Steuereinheit SEi gültiggeschaltet. In einem fünften Schritt 150 wird die Funktionsclusterzuweisung Zi in der Steuereinheit SEi verwendet.

In einer optionalen Weiterentwicklung kann ein Befehl 230 zum Vorbereiten 130 der Steuereinheit SEi auf ein Verwenden 150 der Funktionsclusterzuweisung Zi übertragen werden. Alternativ oder zusätzlich kann ein Befehl 240 zum Gültigschalten 140 der Funktionsclusterzuweisung Zi über ein Datennetz übertragen werden und/oder über einen Datenbus 10 erfolgen.

Eine weitere Weiterbildung sieht vor, dass das Übermitteln 110 der Funktionsclusterzuweisung Zi und/oder das Übertragen eines oder mehrerer der obengenannten Befehlsarten 230, 240 mittels eines Diagnoseprotokolls erfolgt.

Insbesondere bevorzugt ist, wenn beim Übermitteln 110 der Funktionsclusterzuweisung Zi und/oder beim Vorbereiten 130 der Steuereinheit SEi auf ein Verwenden 150 der Funktionsclusterzuweisung Zi und/oder beim Gültigschalten 140 der Funktionsclusterzuweisung Zi eine andere ältere Funktionsclusterzuweisung in der Steuereinheit SEi gelöscht wird.

Falls mehrere gleich zu konfigurierende Steuereinheiten SEi vorhanden sind, kann ein Laden der Funktionsclusterzuweisung Zi in diese Steuereinheiten SEi dadurch beschleunigt werden, dass beim Übermitteln 110 der Funktionsclusterzuweisung Zi die Funktionsclusterzuweisung Zi gleichzeitig von mehreren gleichartigen Steuereinheiten SEi empfangen wird. Alternativ oder zusätzlich kann das Verwenden 150 der Funktionsclusterzuweisung Zi auf mehrere Steuereinheiten SEi gleichzeitig vorbereitet werden.

Von besonderem Vorteil ist, wenn beim Gültigschalten 140 der Funktionsclusterzuweisung Zi die Funktionsclusterzuweisung Zi in mehreren Steuereinheiten SEi gleichzeitig gültiggeschaltet wird. Hierdurch kann eine gleichzeitige Nutzung 150 von zueinander unverträglichen Funktionsclusterzuweisungen Zi in den Steuereinheiten SEi vermieden werden.

Durch die nachladbare Zuweisung Zi der Funktionscluster FCi können verschiedenste Fahrzeugderivate FTi mit ein und derselben Software verwirklicht werden. Die Funktionsclusterzuweisung Zi ist somit jederzeit änderbar. Dies kann direkt über einen Netzwerkmaster DQ oder ein externes Werkzeug erfolgen. Die Funktionsclusterzuweisung Zi wird dabei an alle im Netzwerk 10 angeschlossenen Steuereinheiten SEi verteilt. Die Funktionsclusterzuweisung Zi kann jederzeit geändert werden. Dadurch sind keine zusätzlichen Softwarestände für verschiedene Fahrzeugderivate FTi notwendig. Jede Steuereinheit SEi im Fahrzeug wird immer auf den im Fahrzeug geltenden Stand der Funktionscluster FCi gebracht.

Im Folgenden wird näher erläutert, wie das vorgeschlagene Verfahren ausgeführt werden kann.

Über einen zuvor definierten Dienst kann ein Netzwerkmaster DQ eine neue Funktionsclusterzuweisung Zi übermitteln. Dies kann beispielsweise ein Diagnosetester oder eine andere Datenquelle DQ im Netzwerk 10 sein. Diese neue Funktionsclusterzuweisung Zi wird durch den Netzwerkmaster DQ anschließend im gesamten Netzwerk 10 verteilt. Dabei verwendet der Netzwerkmaster DQ beispielsweise das im Netzwerk 10 vorhandene Diagnoseprotokoll und baut somit eine Verbindung zu jeder einzelnen Steuereinheit SEi im Netzwerk 10 auf und überspielt die neue Funktionsclusterzuweisung Zi.

Ein externes Werkzeug DQ, welches einen direkten Zugriff auf das Netzwerk 10 hat, kann ebenfalls die neue Funktionsclusterzuweisung Zi an jede einzelne Steuereinheit SEi im Netzwerk 10 verteilen. Es kann hierbei beispielsweise ein sowieso vorhandenes Diagnoseprotokoll verwenden. Dabei wird ebenfalls jede einzelne Steuereinheit SEi im Netzwerk 10 angesprochen und die neue Zuweisung Zi übertragen.

Jede Steuereinheit SEi lädt anschließend die in der Steuereinheit SEi gespeicherte Zuweisung Zi der Funktionscluster FCi und konfiguriert alle betroffenen Softwareschichten für die neue Funktionsclusterzuweisung Zi. Nach einem anschließenden Rücksetzen des Systems ist die neue Funktionsclusterzuweisung Zi im Netzwerk 10 gültig. Die einzelnen (in den Steuergeräten SEi hinterlegten) Funktionsclusterzuweisungen Zi können durch den Netzwerkmaster DQ jederzeit auslesbar sein.

## Patentansprüche

1. Verfahren (100) zum Konfigurieren einer Steuereinheit (SEi), der unterschiedliche Teilmengen von Funktionsclustern (FCi) zuordenbar sind, wobei das Verfahren (100) folgende Schritte umfasst:
- Übermitteln (110) einer fahrzeugtypspezifischen Funktionsclusterzuweisung (Zi) von einer Datenquelle (DQ) zu der Steuereinheit (SEi), wobei die Funktionsclusterzuweisung (Zi) die Steuereinheit (SEi) einer fahrzeugtypspezifischen Auswahl von Funktionsclustern (FCi) zuordnet, wobei die Auswahl von Funktionsclustern (FCi) eine der unterschiedlichen Teilmengen von Funktionsclustern (FCi) ist, die der Steuereinheit (SEi) zuordenbar sind, wobei die Auswahl auch die Möglichkeit einschließt, dass die Auswahl mehrere Funktionscluster (FCi) gleichzeitig umfasst;
- Empfangen (120) der fahrzeugtypspezifischen Funktionsclusterzuweisung (Zi) durch die Steuereinheit (SEi);
- Vorbereiten (130) der Steuereinheit (SEi) auf ein Verwenden der fahrzeugtypspezifischen Funktionsclusterzuweisung (Zi);
- Gültigschalten (140) der fahrzeugtypspezifischen Funktionsclusterzuweisung (Zi) in der Steuereinheit (SEi), und
- Verwenden (150) der fahrzeugtypspezifischen Funktionsclusterzuweisung (Zi) in der Steuereinheit (SEi).

2. Verfahren (100) nach Anspruch 1, **dadurch gekennzeichnet, dass** das Übermitteln (110) der Funktionsclusterzuweisung (Zi) über ein Datennetz und/oder über einen Datenbus (10) erfolgt.

3. Verfahren (100) nach Anspruch 1 oder 2, **dadurch gekennzeichnet, dass** ein Übertragen eines Befehls (230) zum Vorbereiten (130) der Steuereinheit (SEi) auf ein Verwenden (150) der Funktionsclusterzuweisung (Zi) und/oder ein Übertragen eines Befehls (240) zum Gültigschalten (140) der Funktionsclusterzuweisung (Zi) über ein Datennetz und/oder über einen Datenbus (10) erfolgt.

4. Verfahren (100) nach einem der Ansprüche 1 bis 3, **dadurch gekennzeichnet, dass** von einer Datensenke (DS) in einem weiteren Schritt eines Auslesens (160) die Funktionsclusterzuweisung (Zi) über ein Datennetz und/oder über einen Datenbus (10) ausgelesen wird.

5. Verfahren (100) nach einem der Ansprüche 2 bis 4, **dadurch gekennzeichnet, dass** der Datenbus (10) ein CAN-Bus, ein LIN-Bus, ein MOST-Bus und/oder ein FlexRay-Bus ist.

6. Verfahren (100) nach einem der Ansprüche 1 bis 5, **dadurch gekennzeichnet, dass** das Übermitteln (110) der Funktionsclusterzuweisung (Zi) und/oder ein Übertragen eines Befehls (230) zum Vorbereiten (130) der Steuereinheit (SEi) auf ein Verwenden (150) der Funktionsclusterzuweisung (Zi) und/oder ein Übertragen eines Befehls (240) zum Gültigschalten (140) der Funktionsclusterzuweisung (Zi) mittels eines Diagnoseprotokolls, eines Netzwerkmanagementprotokolls, eines Überwachungsprotokolls oder eines Messprotokolls erfolgt.

7. Verfahren (100) nach einem der Ansprüche 1 bis 6, **dadurch gekennzeichnet, dass** beim Übermitteln (110) der Funktionsclusterzuweisung (Zi) und/oder beim Vorbereiten (130) der Steuereinheit (SEi) auf ein Verwenden (150) der Funktionsclusterzuweisung (Zi) und/oder beim Gültigschalten (140) der Funktionsclusterzuweisung (Zi) eine andere ältere Funktionsclusterzuweisung (Zi) in der Steuereinheit (SEi) gelöscht wird.

8. Verfahren (100) nach einem der Ansprüche 1 bis 7, **dadurch gekennzeichnet, dass** beim Übermitteln (110) der Funktionsclusterzuweisung (Zi) die Funktionsclusterzuweisung (Zi) gleichzeitig von mehreren Steuereinheiten (SEi) empfangen wird und/oder dass beim Vorbereiten (130) der Steuereinheit (SEi) auf ein Verwenden (150) der Funktionsclusterzuweisung (Zi) gleichzeitig mehrere Steuereinheiten (SEi) das Verwenden (150) der Funktionsclusterzuweisung (Zi) vorbereiten und/oder dass beim Gültigschalten (140) der Funktionsclusterzuweisung (Zi) die Funktionsclusterzuweisung (Zi) in mehreren Steuereinheiten (SEi) gleichzeitig gültiggeschaltet wird.

9. Steuereinheit (SEi),
wobei die Steuereinheit (SEi), welcher unterschiedliche Teilmengen von Funktionsclustern (FCi) zuordenbar sind, dazu vorbereitet ist, folgende Schritte durchzuführen:
- Empfangen (120) einer fahrzeugtypspezifischen Funktionsclusterzuweisung (Zi) von einer Datenquelle (DQ), wobei die Funktionsclusterzuweisung (Zi) die Steuereinheit (SEi) einer fahrzeugtypspezifischen Auswahl von Funktionsclustern (FCi) zuordnet, wobei die Auswahl von Funktionsclustern (FCi) eine der unterschiedlichen Teilmengen von Funktionsclustern (FCi) ist, die der Steuereinheit (SEi) zuordenbar sind, wobei die Auswahl auch die Möglichkeit einschließt, dass die Auswahl mehrere Funktionscluster (FCi) gleichzeitig umfasst;
- Vorbereiten (130) der Steuereinheit (SEi) auf ein Verwenden der fahrzeugtypspezifischen Funktionsclusterzuweisung (Zi);
- Gültigschalten (140) der fahrzeugtypspezifischen Funktionsclusterzuweisung (Zi) in der Steuereinheit (SEi); und
- Verwenden (150) der fahrzeugtypspezifischen Funktionsclusterzuweisung (Zi) in der Steuereinheit (SEi).

10. Fahrzeug,
**dadurch gekennzeichnet, dass**
das Fahrzeug mindestens eine Steuereinheit (SEi) nach Anspruch 9 umfasst.

## Claims

1. Method (100) of configuring a control unit (SEi) which can be allocated different subsets of function clusters (FCi), wherein the method (100) comprises the following steps:
- transmitting (110) a vehicle type-specific function cluster assignment (Zi) from a data source (DQ) to the control unit (SEi), wherein the function cluster assignment (Zi) allocates the control unit (SEi) to a vehicle type-specific selection of function clusters (FCi), wherein the selection of function clusters (FCi) is one of the different subsets of function clusters (FCi) which can be allocated to the control unit (SEi), wherein the selection also includes the possibility that the selection simultaneously comprises a plurality of function clusters (FCi);
- receiving (120) the vehicle type-specific function cluster assignment (Zi) by the control unit (SEi);
- preparing (130) the control unit (SEi) for a use of the vehicle type-specific function cluster assignment (Zi) ;
- validating (140) the vehicle type-specific function cluster assignment (Zi) in the control unit (SEi), and
- using (150) the vehicle type-specific function cluster assignment (Zi) in the control unit (SEi).

2. Method (100) according to claim 1, **characterised in that** the function cluster assignment (Zi) is transmitted (110) via a data network and/or via a data bus (10).

3. Method (100) according to claim 1 or 2, **characterised in that** a command (230) is transmitted for preparing (130) the control unit (SEi) for a use (150) of the function cluster assignment (Zi) and/or a command (240) is transmitted for validating (140) the function cluster assignment (Zi) via a network and/or via a data bus (10).

4. Method (100) according to claim 1 to 3, **characterised in that** in a further step of reading (160) the function cluster assignment (Zi) is read by a data sink (DS) via a data network and/or via a data bus (10).

5. Method (100) according to one of claims 2 to 4, **characterised in that** the data bus (10) is a CAN bus, a LIN bus, a MOST bus and/or a FlexRay bus.

6. Method (100) according to one of claims 1 to 5, **characterised in that** the function cluster assignment (Zi) is transferred (110) and/or a command (230) is transmitted for preparing (130) the control unit (SEi) for a use (150) of the function cluster assignment (Zi) and/or a command (240) is transmitted for validating (140) the function cluster assignment (Zi) by means of a diagnosis protocol, a network management protocol, a monitoring protocol or a measurement protocol.

7. Method (100) according to one of claims 1 to 6, **characterised in that** upon transfer (110) of the function cluster assignment (Zi) and/or upon preparation (130) of the control unit (SEi) for a use (150) of the function cluster assignment (Zi) and/or upon validation (140) of the function cluster assignment (Zi) another older function cluster assignment (Zi) in the control unit (SEi) is deleted.

8. Method (100) according to one of claims 1 to 7, **characterised in that** upon transfer (110) of the function cluster assignment (Zi) the function cluster assignment (Zi) is received simultaneously by a plurality of control units (SEi) and/or that upon preparation (130) of the control unit (SEi) for a use (150) of the function cluster assignment (Zi) a plurality of control units (SEi) simultaneously prepare the use (150) of the function cluster assignment (Zi) and/or that upon validation (140) of the function cluster assignment (Zi) is validated simultaneously in a plurality of control units (SEi).

9. Control unit (SEi), wherein the control unit (SEi), to which different subsets of function clusters (FCi) can be allocated, is prepared to carry out the following steps:
- receiving (120) a vehicle type-specific function cluster assignment (Zi) from a data source (DQ), wherein the function cluster assignment (Zi) allocates the control unit (SEi) to a vehicle type-specific selection of function clusters (FCi), wherein the selection of function clusters (FCi) is one of the different subsets of function clusters (FCi) which can be allocated to the control unit (SEi), wherein the selection also includes the possibility that the selection simultaneously comprises a plurality of function clusters (FCi);
- preparing (130) the control unit (SEi) for a use of the vehicle type-specific function cluster assignment (Zi) ;
- validating (140) the vehicle type-specific function cluster assignment (Zi) in the control unit (SEi); and
- using (150) the vehicle type-specific function cluster assignment (Zi) in the control unit (SEi).

10. Vehicle, **characterised in that** the vehicle comprises at least one control unit (SEi) according to claim 9.

## Revendications

1. Procédé (100) servant à configurer une unité de commande (SEi), à laquelle différentes quantités partielles de groupes fonctionnels (FCi) peuvent être attribuées, dans lequel le procédé (100) comprend les étapes suivantes consistant à :
- transmettre (110) une affectation de groupe fonctionnel (Zi) spécifique au type de véhicule d'une source de données (DQ) à une unité de commande (SEi), dans lequel l'affectation de groupe fonctionnel (Zi) attribue l'unité de commande (SEi) à une sélection spécifique au type de véhicule de groupes fonctionnels (FCi), dans lequel la sélection de groupes fonctionnels (FCi) est l'une des différentes quantités partielles de groupes fonctionnels (FCi), qui peuvent être attribuées à l'unité de commande (SEi), dans lequel la sélection inclut également la possibilité que la sélection comprenne de manière simultanée plusieurs groupes fonctionnels (FCi) ;
- recevoir (120) l'affectation de groupe fonctionnel (Zi) spécifique au type de véhicule par l'unité de commande (SEi) ;
- préparer (130) l'unité de commande (SEi) à une utilisation de l'affectation de groupe fonctionnel (Zi) spécifique au type de véhicule ;
- activer de manière valide (140) l'affectation de groupe fonctionnel (Zi) spécifique au type de véhicule dans l'unité de commande (SEi), et
- utiliser (150) l'affectation de groupe fonctionnel (Zi) spécifique au type de véhicule dans l'unité de commande (SEi).

2. Procédé (100) selon la revendication 1, **caractérisé en ce que** la transmission (110) de l'affectation de groupe fonctionnel (Zi) est effectuée par l'intermédiaire d'un réseau de données et/ou par l'intermédiaire d'un bus de données (10).

3. Procédé (100) selon la revendication 1 ou 2, **caractérisé en ce qu'**un transfert d'une instruction (230) visant à préparer (130) l'unité de commande (SEi) à une utilisation (150) de l'affectation de groupe fonctionnel (Zi) et/ou un transfert d'une instruction (240) visant à activer de manière valide (140) l'affectation de groupe fonctionnel (Zi) sont effectués par l'intermédiaire d'un réseau de données et/ou par l'intermédiaire d'un bus de données (10).

4. Procédé (100) selon l'une quelconque des revendications 1 à 3, **caractérisé en ce que** l'affectation de groupe fonctionnel (Zi) est lue par l'intermédiaire d'un réseau de données et/ou d'un bus de données (10) par un collecteur de données (DS) au cours d'une autre étape d'une lecture (160).

5. Procédé (100) selon l'une quelconque des revendications 2 à 4, **caractérisé en ce que** le bus de données (10) est un bus CAN, un bus LIN, un bus MOST et/ou un bus FlexRay.

6. Procédé (100) selon l'une quelconque des revendications 1 à 5, **caractérisé en ce que** la transmission (110) de l'affectation de groupe fonctionnel (Zi) et/ou un transfert d'une instruction (230) visant à préparer (130) l'unité de commande (SEi) à une utilisation (150) de l'affectation de groupe fonctionnel (Zi) et/ou un transfert d'une instruction (240) servant à activer de manière valide (140) l'affectation de groupe fonctionnel (Zi) sont effectués au moyen d'un protocole de diagnostic, d'un protocole de gestion de réseau, d'un protocole de surveillance ou d'un protocole de mesure.

7. Procédé (100) selon l'une quelconque des revendications 1 à 6, **caractérisé en ce que** lors de la transmission (110) de l'affectation de groupe fonctionnel (Zi) et/ou lors de la préparation (130) de l'unité de commande (SEi) à une utilisation (150) de l'affectation de groupe fonctionnel (Zi) et/ou lors de l'activation valide (140) de l'affectation de groupe fonctionnel (Zi), une autre affectation de groupe fonctionnel (Zi) est supprimée dans l'unité de commande (SEi).

8. Procédé (100) selon l'une quelconque des revendications 1 à 7, **caractérisé en ce que** lors de la transmission (110) de l'affectation de groupe fonctionnel (Zi), l'affectation de groupe fonctionnel (Zi) est reçue de manière simultanée par plusieurs unités de commande (SEi), et/ou **en ce que** lors de la préparation (130) de l'unité de commande (SEi) à une utilisation (150) de l'affectation de groupe fonctionnel (Zi), plusieurs unités de commande (SEi) préparent de manière simultanée l'utilisation (150) de l'affectation de groupe fonctionnel (Zi), et/ou **en ce que** lors de l'activation valide (140) de l'affectation de groupe fonctionnel (Zi), l'affectation de groupe fonctionnel (Zi) est activée de manière valide dans plusieurs unités de commande (SEi) de manière simultanée.

9. Unité de commande (SEi),
dans laquelle l'unité de commande (SEi), à laquelle différentes quantités partielles de groupes fonctionnels (FCi) peuvent être attribuées, est préparée pour mettre en oeuvre les étapes suivantes consistant à :
- recevoir (120) une affectation de groupe fonctionnel (Zi) spécifique au type de véhicule d'une source de données (DQ), dans laquelle l'affectation de groupe fonctionnel (Zi) attribue l'unité de commande (SEi) à une sélection spécifique au type de véhicule de groupes fonctionnels (FCi), dans laquelle la sélection de groupes fonctionnels (FCi) est une des différentes quantités partielles de groupes fonctionnels (FCi), qui peuvent être attribuées à l'unité de commande (SEi), dans laquelle la sélection inclut également la possibilité que la sélection comprenne de manière simultanée plusieurs groupes fonctionnels (FCi) ;
- préparer (130) l'unité de commande (SEi) à une utilisation de l'affectation de groupe fonctionnel (Zi) spécifique au type de véhicule ;
- activer de manière valide (140) l'attribution de groupe fonctionnel (Zi) spécifique à un type de véhicule dans l'unité de commande (SEi) ; et
- utiliser (150) l'affectation de groupe fonctionnel (Zi) spécifique au type de véhicule dans l'unité de commande (SEi).

10. Véhicule,
**caractérisé en ce**
**que** le véhicule comprend au moins une unité de commande (SEi) selon la revendication 9.
